# EUROPEAN PATENT APPLICATION

(11) **EP 3 270 281 A1**
(43) Date of publication of application: **17.01.2018**
(21) Application number: 17180966.8
(22) Date of filing: 12.07.2017
(51) Int. Cl.: G06F 3/0488, G06F 9/44, G06F 3/0481, G06F 3/0484, G06Q 50/12

(54) **TERMINAL DEVICE AND PROGRAM**

(30) Priority: 14.07.2016 JP 2016139437
(71) Applicant: Toshiba TEC Kabushiki Kaisha, Tokyo 141-8562 (JP)
(72) Inventor: MATUMOTO, Yuuki, Shinagawa-ku, Tokyo 141-8562 (JP)
(74) Representative: Takeuchi, Maya

(57) **Abstract**

A terminal device includes a display unit configured to display an image on a screen thereof and to be responsive to a touch operation with respect to a position on the screen, a processor, and a memory device storing programs executable by the processor. When executed, the programs cause the processor to control the display unit to display image information indicating an order item in a set display size and position, set an operation area at a position on the screen in which a touch operation corresponds to an instruction for selecting the order item, set an operation area at a position on the screen in which a touch operation corresponds to an instruction for selecting the order item, change a display size and/or position of the operation area for superimposition on the image information, and save the changed display size and/or position of the operation area.

## Description

### FIELD

The present invention relates in general to an order reception processing technology used, for instance, in restaurant and embodiments described herein relate in particular to a terminal device, a method for generating an order interface, and a program corresponding thereto.

### BACKGROUND

In a restaurant or the like, an order scheme is used in which an image that shows a menu item is displayed on an order terminal and a button is positioned on the image in a superimposed manner, and thus an order for the menu item is placed by touching the button.

However, in such an order reception processing apparatus, because a size of the button is fixed, a size of the menu image cannot be changed and certain menus are not very user-friendly.

To solve such problems, there is provided a terminal device, comprising:
a display unit configured to display an image on a screen thereof and to be responsive to a touch operation with respect to a position on the screen;
a processor; and
a memory device storing programs executable by the processor causing the processor to:
   control the display unit to display image information indicating an order item in a set display size and position,
   set an operation area at a position on the screen in which a touch operation corresponds to an instruction for selecting the order item,
   set an operation area at a position on the screen in which a touch operation corresponds to an instruction for selecting the order item,
   change at least one of a display size and a display position of the operation area for superimposition on the image information, and
   save the at least one of the changed display size the changed display position of the operation area.

Preferably, the at least one of the display size and the display position of the operation area is changed based on one or more touch operations.

Preferably still, the operation area includes a plurality of smaller operation areas associated with the order item, each of the smaller operation areas having a predetermined size, and
the position of the smaller operation areas is aligned with the image information, for the superimposition on the image information.

In the above device, each of the smaller operation areas is preferably aligned according to a layout information stored in the memory device.

Alternatively, in the above device, each of the smaller operation areas is preferably aligned according to one or more touch operations.

Suitably, the device further comprises:
a communication interface,
wherein the programs further cause the processor to control the communication interface to transmit the changed display size and the changed display position of the operation area to one or more different order terminal devices.

Suitably still, the programs further cause the processor to:
control the display unit to display name information of the order item in a set display size and position saved in the memory device, and
change at least one of the display size and position of the name information; and
save the at least one of the changed display size and position of the name information in the memory device.

Suitably yet, the programs further cause the processor to:
control the display unit to display a reference button, for retrieving further information regarding the order item, in a set position saved in the memory device;
change a display position of the reference button; and
save the changed display position of the reference button in the memory device.

In the above device, the programs preferably further cause the processor to:
control the display unit to display predetermined information regarding the order item when a touch operation is received with respect to the reference button.

Typically, the programs further cause the processor to:
control the display unit to display a plurality of different image information, each indicating a different order item.

The invention also relates to a method for generating an order interface, the method comprising:
controlling the display unit to display image information indicating an order item in a set display size and position;
setting an operation area at a position on the screen in which a touch operation corresponds to an instruction for selecting the order item;
changing at least one of a display size and a display position of the operation area for superimposition on the image information; and
saving the at least one of the changed display size and the changed display position of the operation area.

Preferably, the at least one of the display size and the display position of the operation area is changed based on one or more touch operations.

Preferably still, the operation area includes a plurality of smaller operation areas associated with the order item, each of the smaller operation areas having a predetermined size, and
the position of the smaller operation areas is aligned with the image information, for the superimposition on the image information.

In the above method, each of the smaller operation areas is preferably aligned according to a layout information stored in the memory device.

Further, in the above method, each of the smaller operation areas is preferably aligned according to one or more touch operations.

Suitably, the method further comprises:
transmitting the changed display size and the changed display position of the operation area to one or more different order terminal devices.

Suitably still, the method further comprises:
controlling the display unit to display name information of the order item in a set display size and position saved in the memory device;
changing at least one of the display size and position of the name information; and
saving the at least one of the changed display size and position of the name information in the memory device.

Suitably yet, the method further comprises:
controlling the display unit to display a reference button, for retrieving further information regarding the order item, in a set position saved in the memory device;
changing a display position of the reference button; and
saving the changed display position of the reference button in the memory device.

In the above method, preferably, it further comprises:
controlling the display unit to display predetermined information regarding the order item when a touch operation is received with respect to the reference button.

Preferably, the method further comprises:
controlling the display unit to display a plurality of different image information, each indicating a different order item.

The invention further relates to a non-transitory computer readable medium containing instructions causing a terminal device having a display unit configured to display an image on a screen thereof and to be responsive to a touch operation with respect to a position on the screen, a memory device, and a processor, to execute the method of generating an order interface as defined above.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a diagram that schematically illustrates an example configuration of an order reception system according to an embodiment.
Fig. 2 is a block diagram illustrating an example configuration of an order terminal according to the embodiment.
Fig. 3 is a block diagram illustrating an example configuration of an order server according to the embodiment.
Fig. 4 is an example of a GUI that is displayed on a display unit of the order terminal.
Fig. 5 is a flowchart illustrating an example sequence of operations of processing order data in the order reception processing apparatus.
Fig. 6 is a block diagram illustrating an example functional configuration of the order terminal.
Fig. 7A is a diagram illustrating layout information that is retained by a menu selection screen.
Fig. 7B is a diagram illustrating an example in which a reference operation area is positioned.
Fig. 7C is a diagram illustrating an example in which a touch frame is set.
Fig. 8A is a diagram illustrating an example of an operation of positioning the reference operation area.
Fig. 8B is a diagram illustrating an example of an operation of moving a position of the reference operation area.
Fig. 8C is a diagram illustrating an example of an operation of changing a size of the reference operation area and setting the touch frame.
Fig. 9 is a diagram illustrating another method of setting the touch frame.
Fig. 10A is a diagram illustrating an example of an operation of setting the name frame to be in an initial position.
Fig. 10B is a diagram illustrating an example of an operation of moving the name frame.
Fig. 11A is a diagram illustrating an example of an operation of setting an "i" button to be in an initial position.
Fig. 11B is a diagram illustrating an example of an operation of moving the "i" button.
Fig. 12 is a diagram illustrating an example screen that pops up when operating the "i" button.
Fig. 13A is a diagram illustrating a state where a first page is displayed.
Fig. 13B is a diagram illustrating a state where a second page is displayed.
Fig. 13C is a diagram illustrating a state where a third page is displayed.
Fig. 13D is a diagram illustrating a state where a fourth page is displayed.
Fig. 13E is a diagram illustrating a state where a fifth page is displayed.
Fig. 14 illustrates allocation information that is generated when the touch frame, the name frame, and the "i" button are set.
Fig. 15A is a diagram illustrating a method of setting priority levels when different types of frames overlap.
Fig. 15B is diagram illustrating the method of setting the priority levels when the same types of frames overlap.
Fig. 16 is a flowchart illustrating an example sequence of operations of GUI creation processing.

### DETAILED DESCRIPTION

Embodiments provide a terminal device and a program, in which a display layout of an image that shows a menu item can be easily changed.

In general, according to one embodiment, a terminal device includes a display unit configured to display an image on a screen thereof and to be responsive to a touch operation with respect to a position on the screen, a processor, and a memory device storing programs executable by the processor. When executed, the programs cause the processor to control the display unit to display image information indicating an order item in a set display size and position, set an operation area at a position on the screen in which a touch operation corresponds to an instruction for selecting the order item, set an operation area at a position on the screen in which a touch operation corresponds to an instruction for selecting the order item, change at least one of a display size and a display position of the operation area for superimposition on the image information, and save the changed display size and the changed display position of the operation area.

### Description of a Hardware Configuration of an Embodiment

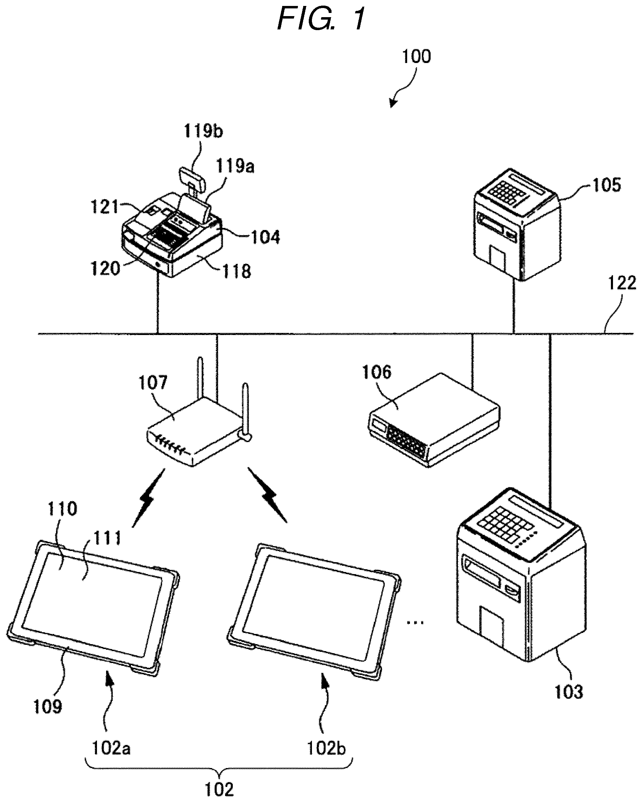

An order reception processing apparatus according to an embodiment will be described with reference to the drawings. Fig. 1 is a diagram that schematically illustrates an example configuration of an order reception processing system 100. The order reception processing system 100, for example, is a system that is utilized in a store such as a bar or restaurant, and manages an order of products from a customer.

As illustrated in Fig. 1, the order reception processing system 100, in which the customer selects a menu item and orders the menu item, includes an order terminal 102 (102a, 102b, and so forth) that is an example of an information input apparatus, a kitchen printer 103 that is installed in a kitchen, a point-of-sale (POS) terminal 104 that is installed at a check-out counter, a customer check printer 105 that is installed in a hall, and an order server 106 that controls all operations of the order reception processing system 100 that is installed in a back office of the store, or the like.

The order server 106 receives order data from the order terminal 102. At this point, the order data includes information related to the ordered menu item, which includes a table code that is set to specify a table from which the order for the menu item (for example, merchandise or a service) is placed, the ordered menu item, and a quantity of the menu item. When receiving the order data from the order terminal 102, the order server 106 transmits the order data to the kitchen printer 103, the POS terminal 104, and the customer check printer 105.

The kitchen printer 103 and the customer check printer 105 print and issue a slip of paper in accordance with the order data that is received from the order server 106. The kitchen printer 103 issues a slip of paper for instructing a cook who prepares a dish to cook the ordered menu item. The customer check printer 105 issues a slip of paper that is handed over after the order menu item is served.

The POS terminal 104 includes a drawer 118 that accommodates a coin and paper money, for receiving cash for settlement and for providing change. The POS terminal 104 performs accounting processing or the like that is based on the order data which is received from the order server 106. The POS terminal 104 has an operator display 119a, a customer display 119b, an input device 120 which includes a keyboard or the like, and a receipt printer 121.

The order terminal 102 (102a, 102b, and so forth) is installed on every table in the store. Each order terminal 102 (102a, 102b, and so forth) performs wireless communication with an external apparatus, such as the order server 106, through a radio repeater 107 (such as a wireless access point) that is installed in a ceiling, or the like. For example, with the wireless communication, the order terminal 102a transmits the order data of the menu item is selected by the customer, to the order server 106. Furthermore, the order terminal 102a, the kitchen printer 103, the POS terminal 104, and the customer check printer 105 are connected to the order server 106 through a local area network (LAN) 122 in such a manner that communication with the order server 106 is available.

Each order terminal 102 (102a, 102b, and so forth) has a housing 109. Then, a display unit 111 that is configured with a liquid crystal display (LCD) or the like and on which various pieces of information can be displayed is provided on one of the side surfaces of the housing 109. The display unit 111 is an example of an image display unit. Furthermore, a touch panel 110, which detects a touch operation on a graphic user interface (GUI) or the like that is provided on a display screen of the display unit 111 on the order terminal 102. The touch panel is able to give an instruction for selection or the like of a menu item that is to be ordered, from among menu items which are displayed on the display screen, for example. The order terminal 102 generates the order data of the menu item that is selected by the touch operation which is detected by the touch panel 110. It is noted that each order terminal 102 may be mounted on a table in the store, and may be placed on the table.

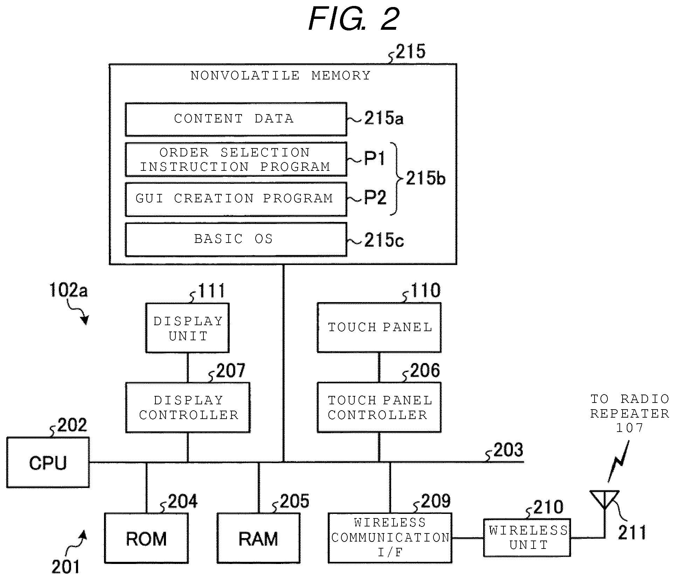

The touch panel 110 detects the touch operation on the GUI that is displayed on the display screen of the display unit 111. Then, the touch panel 110 outputs a result of the detection of the touch operation on the GUI to the CPU 202 (refer to Fig. 2), which will be described below, through a touch panel controller 206 (refer to Fig. 2), which will be described below. The GUI that is displayed on the touch panel 110 will be described in detail below.

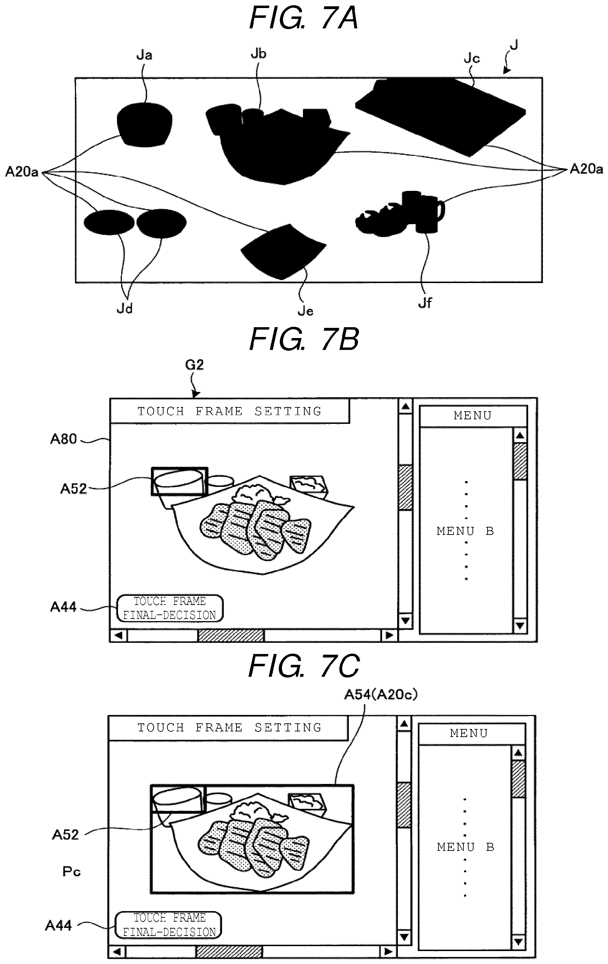

Fig. 2 is a block diagram illustrating an example configuration of an order terminal 102a according to the present embodiment. As illustrated in Fig. 2, the order terminal 102a includes a microcomputer 201 that controls the entire order terminal 102a. The microcomputer 201 has a central processing unit (CPU) 202 that functions as a control unit of the order terminal 102a, a read only memory (ROM) 204 in which various pieces of information, such as a control program, are stored, a random access memory (RAM) 205 in which various pieces of data are stored in a rewritable manner and which functions as a work area of the CPU 202, and a nonvolatile memory 215 in which data is stored in a rewritable manner. Stored in the nonvolatile memory 215 are pieces of image data of various screens that are displayed on the display unit 111, and content data 215a, such as layout information J (refer to Fig. 7A), a program 215b that is executed by the order terminal 102a, an operating system (OS) 215c, a menu code that uniquely specifies a menu item, which is not illustrated, and the like, which will be described below.

The program 215b includes an order selection instruction program P1 that is executed when an order item is selected using the order terminal 102a and an order is placed, and a GUI creation program P2 that is executed when the GUI that is displayed on the order terminal 102a is created.

Furthermore, a touch panel controller 206 and a display controller 207, and a wireless communication interface (I/F) 209 are connected to the microcomputer 201 through a bus line 203. Furthermore, a wireless unit 210 is connected to the wireless communication I/F 209.

The touch panel controller 206 outputs a signal based on input from the touch panel 110, to the microcomputer 201. Based on image data that is input from the microcomputer 201, the display controller 207 displays an image on the display unit 111.

The wireless communication I/F 209 controls the wireless unit 210. The wireless unit 210 performs the wireless communication with the radio repeater 107 (Fig. 1) through an antenna 211. Specifically, the wireless unit 210 performs the wireless communication with the radio repeater 107, and thus transmits the order data or the like to the order server 106. It is noted that all order terminals 102 have the same configuration as illustrated in Fig. 2.

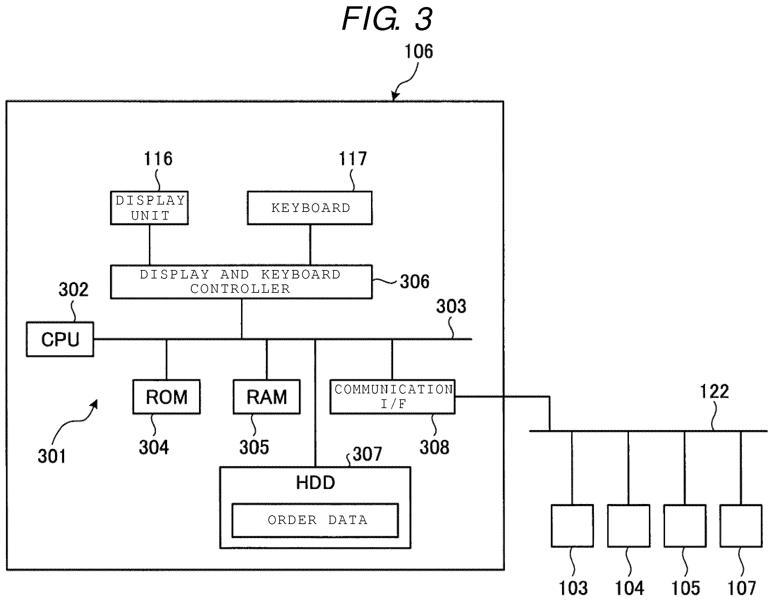

Fig. 3 is a block diagram illustrating an example configuration of the order server 106 according to the present embodiment. As illustrated in Fig. 3, the order server 106 includes a microcomputer 301 that controls the entire order server 106. The microcomputer 301 includes a CPU 302 that controls each unit of the order server 106, a ROM 304 in which various pieces of information, such as a control program, are stored, and a RAM 305 in which various pieces of data are stored in a rewritable manner and which functions as a work area of the CPU 302.

Furthermore, a display and keyboard controller 306, a hard disk drive (HDD) 307, and a communication I/F 308 are connected to the microcomputer 301 through the bus line 303. Based on image data that is input from the microcomputer 301, the display and keyboard controller 306 displays an image on a display unit 116 such as an LCD or the like. Furthermore, the display and keyboard controller 306 outputs information that is input from a keyboard 117, to the microcomputer 301.

As described above, each of the kitchen printer 103, the POS terminal 104, the customer check printer 105, and the radio repeater 107 are connected to the communication I/F 308 through the LAN 122. The order server 106 transmits and receives various pieces of information to and from each of these apparatuses through the communication I/F 308. Various pieces of information, such as the order data that is received from the order terminal 102, are stored in the HDD 307. Description of the GUI Displayed on the Order Terminal

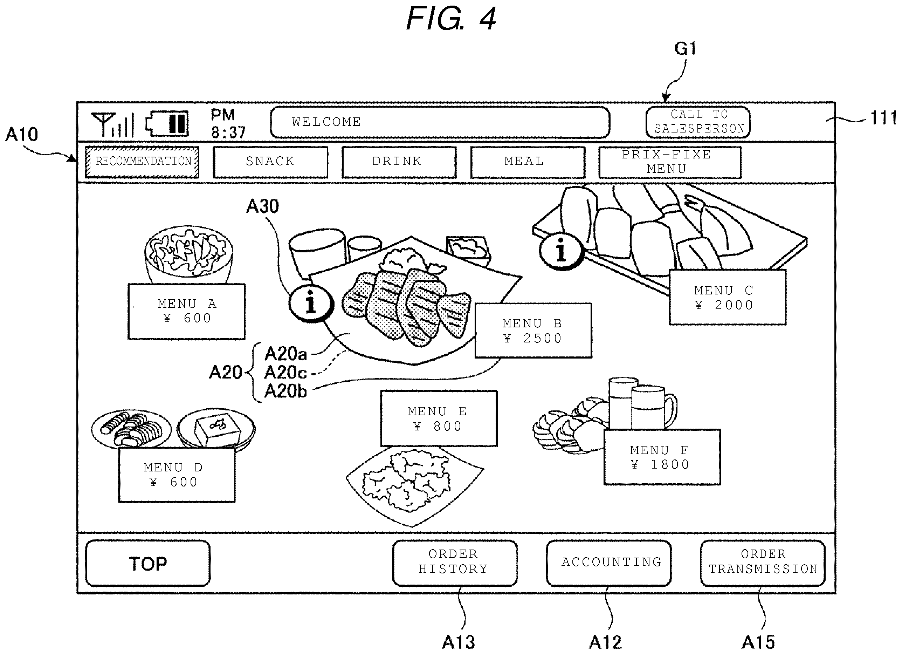

Next, an example of the GUI that is displayed on the display unit 111 of the order terminal 102 is described with reference with Fig. 4. Fig. 4 is an example of the GUI of a menu selection screen that is displayed on the display unit 111 of the order terminal 102 according to the present embodiment. As illustrated in Fig. 4, the CPU 202 (Fig. 2) of the order terminal 102 displays a menu selection screen G1 including a menu display A20 on the display unit 111. The menu display A20 includes a photographic image A20a of a menu item, a name frame A20b that is an information display area, on which pieces of supplementary information, such as a name and a price of the menu item, and the number of calories as necessary are displayed, and a touch frame A20c. Furthermore, a portion of the menu display A20 includes an "i" button A30 that causes detailed information of the menu item to be displayed in a pop-up manner.

The photographic image A20a has a display size that varies from one menu item to another. That is, the photographic image A20a that shows a specific menu item is displayed in a greater (or lesser) display size than other menu items. The specific menu item is one that is independently decided by the store, and may indicate a menu item that is sold in large quantity, a menu item that is for sale at a special price, a recommended menu item, or the like. Furthermore, the position of the photographic image A20a on the menu selection screen G1 is unrestricted. The positioning of the menu display A20 for menu items in any position in any display size on the display unit 111 of the order terminal 102 is referred to as a free layout scheme. In a bar or a restaurant, generally, a physical menu in which an image of a menu item is positioned in any desired manner is provided. The photographic image A20a that is illustrated in Fig. 4 results from editing an image that is shown on the physical menu or the like and displaying the edited image on the order terminal 102. Each photographic image A20a has layout information (e.g., the layout information J, refer to Fig. 7A) of its own on which position on the display unit 111 that the image is displayed on and on which menu item each photographic image A20a that the image corresponds to. For example, the photographic image A20a in Fig. 4 has layout information that the photographic image A20a is an image of "menu B."

Additionally, the menu selection screen G1, as illustrated in Fig. 4, includes a category selection button A10, an accounting button A12, an order history button A13, and an order transmission button A15. The category selection button A10 is a button for providing an instruction for displaying of a menu item on a category basis to the order terminal 102. The menu selection screen G1 in Fig. 4 shows a state in which a recommended category is selected. The accounting button A12 is a button for instructing the POS terminal 104 to perform accounting of the ordered menu item when the customer finishes eating and drinking or the like. The order history button A13 is a button for instructing the order terminal 102 to display an order history of the menu item(s). The order transmission button A15 is a button for instructing the order terminal 102 to transmit the order data to the order server 106.

In order for the customer to order a desired menu item, the touch frame A20c is assigned to the photographic image A20a. The touch frame A20c is an operation area which is superimposed on an area on which a menu item is displayed, The touch frame A20c is invisible and has an area in accordance with a shape and a display size of the photographic image A20a. When the customer touches within the touch frame A20c, the touch panel 110 detects that the touch frame A20c is touched, and recognizes that a menu item which corresponds to the photographic image A20a on which the touch frame A20c is superimposed is selected. Therefore, the customer can intuitively select the menu item that corresponds to the photographic image A20a. It is noted that, in the same manner, the name frame A20b has a function of detecting the touch operation, and is equipped with a function of providing an instruction for the selection of a menu item that corresponds to the name frame A20b. Therefore, the customer touches on either the name frame A20b or the photographic image A20a, and thus can select the menu item.

It is noted that, when a menu item that corresponds to the name frame A20b and the touch frame A20c cannot be ordered, the order terminal 102 may cancel the function of selecting the menu item and may provide a notification that the menu item cannot be ordered. That is, when the menu item is sold out, "SOLD OUT" may be displayed on the name frame A20b, and gray hatching may be applied to the touch frame A20c and thus it may be specified that the menu items cannot be selected. Furthermore, when the order book is locked such as when the time for the last order is exceeded, the gray hatching may be applied to the touch frame A20c and thus it may be specified that the menu item cannot be selected.

The GUI is created, that is, the name frame A20b and the touch frame A20c are assigned to the photographic image A20a, and the "i" button A30 is assigned by executing the GUI creation program P2 (Fig. 2) using the order terminal 102 that is an information input apparatus. The GUI may be created with any one (for example, the order terminal 102a) of the order terminals 102. Then, information relating to the created GUI is transmitted to the order server 106 through the radio repeater 107, and is distributed from the order server 106 to other order terminals 102 again through the radio repeater 107. By doing this, the created GUI can be shared among all order terminals 102.

It is noted that the GUI may also be created in the order server 106. Alternatively, the GUI may be created in a personal computer (not illustrated in Fig. 1) that is connected to the LAN 122. At this time, the created GUI is distributed to all order terminals 102 through the radio repeater 107, and the GUI is shared among all the order terminals 102. It is noted that the GUI will be described below as being created in the order terminal 102a.

### Description of the Operation by the Order Reception Processing Apparatus

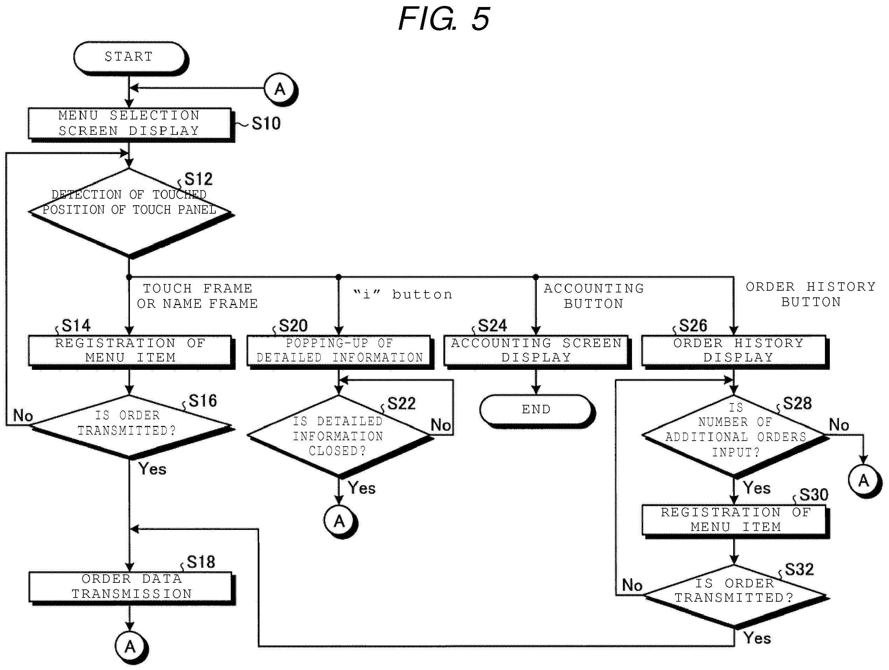

Next, a flow of transmission processing of the order data that is performed by the order reception processing system 100 is described with reference to Fig. 5. Fig. 5 is a flowchart illustrating an example sequence of operations of processing order data in the order reception processing system 100.

First, the CPU 202 (Fig. 2) of the order terminal 102 executes the order selection instruction program P1, and thus displays the menu selection screen G1 on the display unit 111 (Step S10).

The CPU 202 detects a touched position on the touch panel 110 of the order terminal 102 (Step S12). The CPU 202 performs processing in accordance with the touched position of the touch panel 110. That is, when the touch operation on the touch frame A20c or the name frame A20b is detected, processing proceeds to Step S14. Furthermore, when the touch operation on the "i" button A30 is detected, processing proceeds to Step S20. Additionally, when the touch operation on the accounting button A12 is detected, processing proceeds to Step S24. Then, when the touch operation on the order history button A13 is detected, processing proceeds to Step S26.

In Step S12, when the touch operation on the touch frame A20c or the name frame A20b is detected, the CPU 202 registers a menu item that corresponds to the touch frame A20c or the name frame A20b which is touched on, with the RAM 205 (Step S14). At this time, information, such as the menu code, that sets the menu item that corresponds to the touch frame A20c or the name frame A20b which is touched on, to be identifiable is retained as the order data in the RAM 205.

Next, the touch operation on the order transmission button A15 that is included in the menu selection screen G1 is detected by the touch panel 110, and thus the CPU 202 determines that an instruction for transmission of the order data is provided (Step S16). The CPU 202 proceeds to Step S18 under the condition that the instruction for the transmission of the order data is provided (Yes in Step S16). Furthermore, in a case where the instruction for the transmission of the order data is not provided (No in Step S16), the CPU 202 returns to Step S12, and waits for selection of a new menu item or an operation instruction other than the selection.

In Step S18, the CPU 202 transmits the order data that is stored in the RAM 205, to the order server 106. Thereafter, proceeding to Step S10 takes place, and the menu selection screen G1 is displayed.

Furthermore, in Step S12, under the condition that the touch operation on the "i" button A30 is detected, the CPU 202 reads detailed information of a menu item in association with the "i" button A30 that is touched on, from the nonvolatile memory 215 (Fig. 2), and displays the detailed information that is read, on the display unit 111 of the order terminal 102, in a pop-up manner (Step S20).

The CPU 202 determines whether or not an instruction for closing the detailed information that is displayed is provided (Step S22). Under the condition that the instruction for closing the detailed information (Yes in Step S22), the CPU 202 returns to Step S10 and displays the menu selection screen G1. Furthermore, in a case where the instruction for closing the detailed information is not provided (No in Step S22), the CPU 202 repeats Step S22. It is noted that, although not illustrated in Fig. 5, in the case where the instruction for closing the detailed information is not provided (No in Step S22), the CPU 202 receives an instruction for an operation by the customer on the detailed information, and thus sends a page of the detailed information, and so forth. It is noted that the instruction for closing the detailed information and the sending of the page of detailed information will be described below.

Furthermore, in Step S12, under the condition that the touch operation on the accounting button A12 is detected, the CPU 202 displays an accounting screen for providing the instruction for the accounting of the ordered menu item, on the display unit 111 of the order terminal 102 (Step S24). Although the accounting screen is not illustrated, the accounting screen includes information that sets a menu item, such as a name of the ordered menu item, to be identifiable, and an amount-of-money information, such as a unit price information or a total-amount information on the order menu item. When the instruction for the accounting is provided, the processing in Fig. 5 is ended.

Furthermore, in Step S12, under the condition that the touch operation on the order history button A13 is detected, the CPU 202 displays an order history screen on the display unit 111 of the order terminal 102 (Step S26). Although the order history screen is not illustrated, in addition to the accounting button A12, the order history button A13, and the order transmission button A15, which are illustrated in Fig. 4, the order history screen includes pieces of information, such as an order history, an additional-order selection display, a unit price, and a total amount.

The CPU 202 determines whether or not, after displaying the order history screen, the touch operation on the additional-order selection display is detected by the touch panel 110 and the number of additional orders of the order-completed menu item is input (Step S28). When the number of additional orders of the order-completed menu item is input (Yes in Step S28), processing proceeds to Step S30. If additional orders are not input (No in Step S28), processing returns to Step S10 and the menu selection screen G1 is displayed.

The CPU 202 generates the order data relating to the order-completed menu item, of which the number of additional orders is input. Then, the CPU 202 registers the generated order data with the RAM 205 (Step S30).

Next, the CPU 202 determines whether or not the instruction of the transmission of the order data, of which the number of additional orders is input, is provided on the order history screen (Step S32). When the instruction for the transmission of the order data is input (Yes in Step S32), processing proceeds to Step S18. When the instruction for the transmission of the order data is not input (No in Step S32), processing returns to Step S28 and selection of a further additional order is awaited.

### Description of a GUI Creation Function

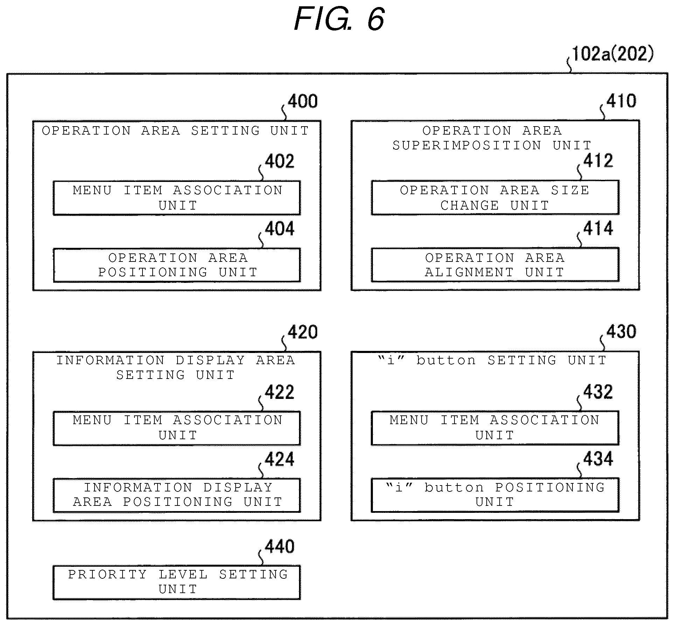

A GUI creation function with which the order terminal 102 that is an example of the information input apparatus is equipped is described with reference to Fig. 6. Fig. 6 is a block diagram illustrating an example functional configuration of the order terminal 102 that is employed in order for the order terminal 102 to perform the GUI creation function. The order terminal 102 (the CPU 202) executes the GUI creation program P2, and thus performs each function that is illustrated in Fig. 6, so that which each function is able to be performed within the RAM 205.

As illustrated in Fig. 6, the order terminal 102a (the CPU 202) includes an operation area setting unit 400, an operation area superimposition unit 410, an information display area setting unit 420, an "i" button setting unit 430, and a priority level setting unit 440.

A position in accordance with the photographic image A20a (Fig. 4) that is an example of image information which is displayed on the display unit 111 (Fig. 2) that is an image display unit is touched on. Thus the operation area setting unit 400 sets an operation area (the touch frame A20c in Fig. 4) in which an instruction for selection of a menu item that corresponds to the photographic image A20a. The operation area setting unit 400 includes a menu item association unit 402 and an operation area positioning unit 404.

The menu item association unit 402 designates which menu item the operation area is set for.

The operation area positioning unit 404 has a predetermined size and a predetermined shape, and sets a reference operation area A52 (refer to Fig. 7B) that is associated with the designated menu item, to be in a position in accordance with the photographic image A20a (the image information). The position in accordance with the photographic image A20a, for example, is set to be to the upper left side or the like of the photographic image A20a.

The operation area superimposition unit 410 changes the reference operation area A52, which is positioned in the photographic image A20a, into a shape in accordance with a display position, a display size, and a display shape of the photographic image A20a, for superimposition on the photographic image A20a. The operation area superimposition unit 410 includes an operation area size change unit 412 and an operation area alignment unit 414.

The operation area size change unit 412 changes a size of the reference operation area A52 in such a manner that the reference operation area A52 is in a state of being circumscribed about the photographic image A20a, and sets a result of the changing as the touch frame A20c.

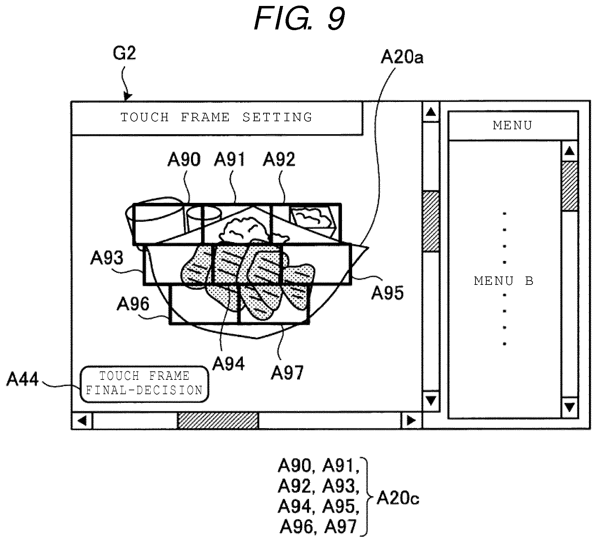

According to the display size and the display shape of the photographic image A20a, the operation area alignment unit 414 causes a plurality of reference operation areas (A90 to A97) (refer to Fig. 9) to be aligned in such a manner as to be in a state of being superimposed on the photographic image A20a, and sets a result of the alignment as the touch frame A20c.

In the position in accordance with the photographic image A20a, the information display area setting unit 420 displays information (for example, a name and a price of a menu item) associated with a menu item that corresponds to the photographic image A20a, and sets the name frame A20b (an information display area) (Fig. 4) for providing an instruction for the selection of a menu item by detecting a touch input. The information display area setting unit 420 includes a menu item association unit 422 and an information display area positioning unit 424.

The menu item association unit 422 designates which menu item the information display area is set for.

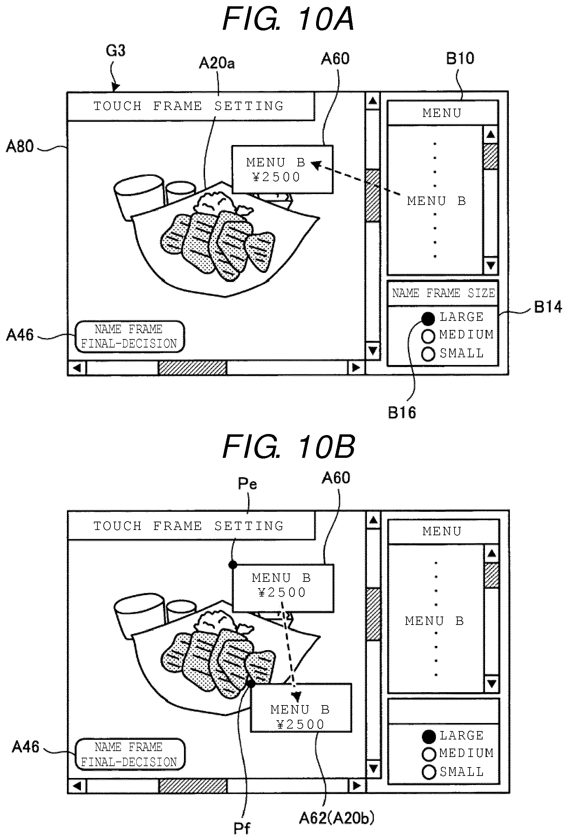

The information display area positioning unit 424 has a predetermined size and a predetermined shape, and positions a name frame A60 (refer to Fig. 10A) that is associated with the designated menu item, in the vicinity of the photographic image A20a. The information display area positioning unit 424 further causes the positioned name frame A60 to be moved to the position in accordance with the photographic image A20a, and sets the resulting name frame A60 as the name frame A20b.

The "i" button setting unit 430 sets an "i" button A30 (Fig. 4) that causes detailed information of the menu item that corresponds to the photographic image A20a, to pop up, to be in the position in accordance with the photographic image A20a. The "i" button setting unit 430 includes a menu item association unit 432 and an "i" button positioning unit 434.

The menu item association unit 432 designates which menu item the "i" button A30 is set for.

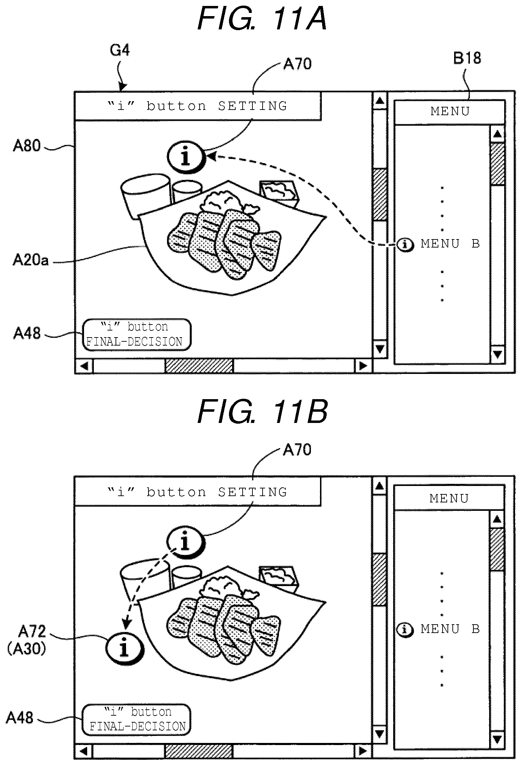

The "i" button positioning unit 434 positions a reference "i" button A70 (refer to Fig. 11A) associated with the designated menu item in the vicinity of the photographic image A20a. The "i" button positioning unit 434 further causes the positioned reference "i" button A70 to be moved to the position in accordance with the photographic image A20a, and sets the resulting reference "i" button A70 as the "i" button A30.

When a plurality of frames that are set, that is, a plurality of touch frames A20c, the name frame A20b, and the "i" button A30 overlap each other, the priority level setting unit 440 allocates a priority level to overlapping areas. The detail will be described below.

### Description of a Method of Setting a Touch Frame

Next, a method of creating the GUI that is displayed on the display unit 111 of the order terminal 102a is described with a case where the menu display A20 that is illustrated in Fig. 4 is created being taken as an example. Figs. 7A to 7C illustrate a method of setting the touch frame A20c. Fig. 7A illustrates layout information that is retained by the menu selection screen. Fig. 7B illustrates an example in which a reference operation area is positioned. Fig. 7C illustrates an example in which a touch frame is set.

The GUI is created by executing the GUI creation program P2 (Fig. 2) in the order terminal 102a. When executing the GUI creation program P2, the CPU 202 (Fig. 2) of the order terminal 102a first reads the layout information J in which a layout of the photographic image A20a that is displayed on the display unit 111 of the order terminal 102a is stored, from the content data 215a of the nonvolatile memory 215. Fig. 7A illustrates an example of the layout information J.

The layout information J has a position and a shape of an area that is occupied by the photographic image A20a which is displayed on the display unit 111, and information of a menu item that is shown by the photographic image A20a. For example, an area Jb that is illustrated in Fig. 7A has coordinate data that indicates an area in which the area Jb is positioned, and information that the area Jb corresponds to "menu B". The layout information J may be image information that is illustrated in Fig. 7A, or may be document data in which each piece of information described above is stored as text data. It is noted that the layout information J is generated when a person who is in charge of a store or the like edits the photographic image A20a that is displayed on the display unit 111, and is stored in the nonvolatile memory 215.

Next, the CPU 202 displays a screen (not illustrated) for selecting one of a setting of the touch frame A20c, a setting of the name frame A20b, and a setting of the "i" button A30, on the display unit 111 of the order terminal 102a. Then, when the setting of the touch frame A20c is selected, the CPU 202 displays a touch frame setting screen G2 that is illustrated in Fig. 7B, on the display unit 111.

As illustrated in Fig. 7B, the touch frame setting screen G2 includes a photographic image display window A80 and a menu item display window B10.

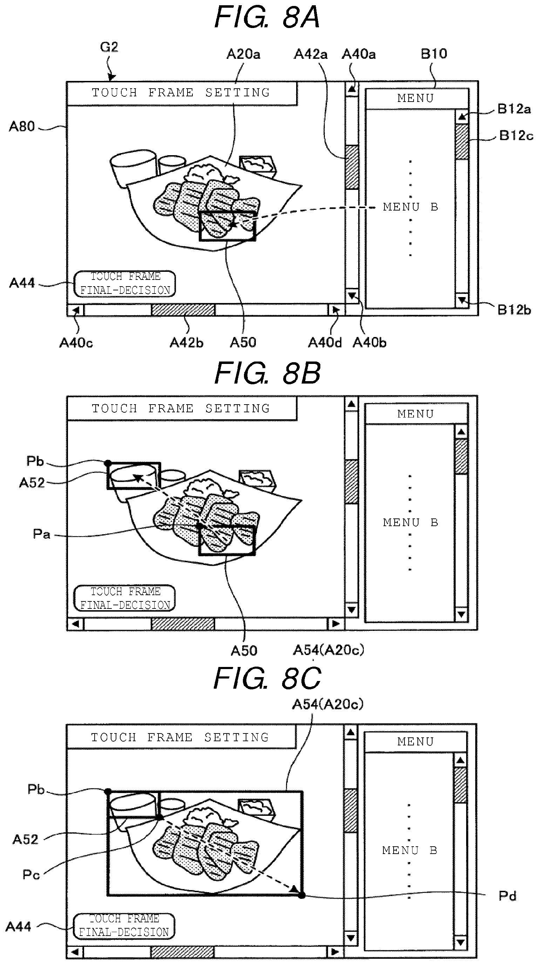

The photographic image display window A80 is a window on which the photographic image A20a that is a target for which the touch frame A20c is set is displayed. The photographic image display window A80 includes scroll buttons A40a and A40b and a scroll bar A42a for scrolling down and up a window, and scroll buttons A40c and A40d and a scroll bar A42b for scrolling the window from side to side (See Fig. 8A). The scroll buttons A40a and A40b and the scroll bar A42a, and the scroll buttons A40c and A40d and the scroll bar A42b are for scrolling up and down and from side to side a display range of the photographic image display window A80, respectively, with the touch operation. Furthermore, the photographic image display window A80 includes a touch frame final-decision button A44 that makes a final decision on the touch frame A20c that is set. A function of the touch frame final-decision button A44 will be described below.

The menu item display window B10 is a window on which a table of menu items is displayed in the form of a list. The menu item display window B10 includes scroll buttons B12a and B12b and a scroll bar B12c for scrolling up and down the window (see Fig. 8A). The scroll buttons B12a and B12b and the scroll bar B12c are for scrolling up and down a display range of the menu item display window B10, with the touch operation.

At this point, as an example, a method of setting the touch frame A20c for the photographic image A20a that shows "menu B", which is displayed on the photographic image display window A80 is described.

An operator first causes a menu item that is displayed in the form of a list on the menu item display window B 10 to be scrolled and selects (touches on) a menu item that is associated with the touch frame A20c. At this point, it is assumed that the photographic image A20a shows "menu B" and thus the touch frame A20c associated with "menu B" is set for the photographic image A20a. The menu item association unit 402 (Fig. 6) detects that "menu B" which is displayed on the menu item display window B10 is touched on and thus recognizes that the touch frame A20c for "menu B" is set.

The operation area positioning unit 404 positions the reference operation area A52 that has a predetermined size and a predetermined shape that are set in advance, in a predetermined position of the photographic image A20a that shows "menu B", for example, in a position that is circumscribed about an upper left portion of the photographic image A20a. It is noted that the position that is circumscribed about the upper left portion of the photographic image A20a is decided by the operation area positioning unit 404 based on the layout information J described above. It is noted that, because there is also a case where a plurality of photographic images A20a that show "menu B" are present on the photographic image display window A80, the operation area positioning unit 404 may detect that the operator touches on the photographic image A20a for which the operator desires to set the touch frame A20c and then may position the reference operation area A52.

Next, the operation area size change unit 412 changes the size of the reference operation area A52 based on the layout information J, for example, in such a manner as to be circumscribed about the photographic image A20a that shows "menu B", and sets a result of the changing to be a reference operation area A54. Then, under the condition that the touch frame final-decision button A44 is touched, the operation area size change unit 412 sets the reference operation area A54 as the touch frame A20c for "menu B". It is noted that the touch frame A20c that is set can be visible in a state in Fig. 7C, but is in a state of being invisible when actually in use.

### Description of a Method of Setting the Touch Frame in accordance with an Instruction of the Operator

It is noted that the touch frame A20c, as illustrated in Figs. 8A to 8C, may be set based on an instruction of the operator. Figs. 8A to 8C illustrate another method of setting the touch frame A20c. Fig. 8A illustrates an example of an operation of positioning a reference operation area A50 that is a reference operation area. Fig. 8B illustrates an example of an operation of moving a position of the reference operation area A50. Fig. 8C illustrates an example of an operation of changing the size of the moved reference operation area A52 and setting the touch frame A20c.

When the operator drags his/her finger up to the photographic image display window A80 while the finger remains touching on the display of "menu B", the operation area positioning unit 404 (Fig. 6) shows the reference operation area A50 associated with "menu B" on the photographic image display window A80. The reference operation area A50 has a predetermined size and a predetermined shape that are set in advance. The reference operation area A50 changes a display position according to a position of the operator's finger.

When the operator lifts his/her finger from the photographic image display window A80, the operation area positioning unit 404 (Fig. 6) positions the reference operation area A50 in a position from which the finger is lifted, on the photographic image display window A80. At this time, the position of the reference operation area A50 can be changed with a later operation, and because of this, may not be exact.

Next, as illustrated in Fig. 8B, the operation area positioning unit 404 (Fig. 6) adjusts a position in which the reference operation area A50 is positioned. Specifically, the operator touches again on the reference operation area A50 to hold the reference operation area A50, and drags an upper left apex Pa of the reference operation area A50 up to a position of an upper left apex Pb of the touch frame A20c that is desired to be set, to generate the reference operation area A52.

Subsequently, as illustrated in Fig. 8C, the operation area size change unit 412 (Fig. 6) changes the size of the reference operation area A52 that is positioned. Specifically, the operator holds a lower right apex Pc of the reference operation area A52 his/her fingers and drags the lower right apex Pc up to a position of a lower right apex Pd of the touch frame A20c that is desired to be set. At this time, the operation area size change unit 412 generates the reference operation area A54 that results from changing each of the lengths of a horizontal side and a vertical side of the reference operation area A52, while a position of the upper left apex Pb of the reference operation area A52 remains fixed. The operator checks that the reference operation area A54 that is displayed on the photographic image display window A80 covers an area of the photographic image A20a and lifts his/her finger. Then, under the condition that the touch frame final-decision button A44 is touched, the operation area size change unit 412 sets the reference operation area A54 as the touch frame A20c for "menu B".

### Description of another Method of Setting the Touch Frame

The method of setting the touch frame A20c is described with reference to Figs. 7A to 7C, and Figs. 8A to 8C, but the method of setting the touch frame A20c is not limited to the method that is illustrated in Figs. 7A to 7C, and Figs. 8A to 8C. Fig. 9 illustrates still another method of setting the touch frame A20c.

As illustrated in Fig. 9, the touch frame A20c may be set with a plurality of reference operation areas (A90 to A97). That is, the operation area positioning unit 404 positions the plurality of reference operation areas (A90 to A97), which are associated with "menu B" by the menu item association unit 402, according to the photographic image A20a. Then, the operation area alignment unit 414 (Fig. 6) aligns the plurality of reference operation areas (A90 to A97) that are positioned, without any gap in between, according to a shape of the photographic image A20a.

The operation area alignment unit 414 sets the plurality of reference operation areas (A90 to A97) that are aligned, as one touch frame A20c. It is noted that the operation area alignment unit 414 may cause the plurality of reference operation areas (A90 to A97) to be aligned (for example, to be circumscribed or inscribed about the photographic image A20a) according to the shape of the photographic image A20a, based on the layout information J described above, or may be aligned with a position in accordance with an instruction of the operator.

It is noted that the touch frame A20c may be set by using the method (Figs. 7A to 7C, and Figs. 8A to 8C) of changing the size of the reference operation area A52 that is set and thus setting the touch frame A20c, and the method of aligning the plurality of reference operation areas (A90 to A97) and thus setting the touch frame A20c.

### Description of a Method of Setting the Name Frame

Next, a method of setting the name frame A20b is described with reference to Figs. 10A and 10B. Figs. 10A and 10B illustrate a method of setting the name frame A20b. Fig. 10A illustrates an example of an operation of setting the name frame A60 to be in an initial position of the name frame A20b. Fig. 10B illustrates an example of moving a position of the name frame A60.

In the order terminal 102a, when the GUI creation program P2 (Fig. 2) is executed and thus the setting of the name frame A20b is selected, a name frame setting screen G3 that is illustrated in Fig. 10A is displayed on the display unit 111.

As illustrated in Fig. 10A, the name frame setting screen G3 includes the photographic image display window A80, the menu item display window B10, and a name frame size setting window B14.

Functions of the photographic image display window A80 and the menu item display window B10 are as described above, but the photographic image display window A80 includes a name frame final-decision button A46 that makes a final decision on the name frame A20b that is set. A function of the name frame final-decision button A46 will be described below.

The name frame size setting window B14 is a window for setting a size of the name frame A20b. The size of the name frame A20b that can be set is decided from three types, large, medium, and small. When the name frame A20b is set, a desired size is selected with a selection button B16 on the name frame size setting window B14.

In Fig. 10A, the operator first causes a list on the menu item display window B10 to be scrolled and selects (touches on) a menu item that is associated with the name frame A20b that is set. At this point, it is assumed that the photographic image A20a shows "menu B" and thus the name frame A20b associated with "menu B" is set for the photographic image A20a. The menu item association unit 422 (Fig. 6) detects that "menu B" displayed on the menu item display window B10 is touched and thus recognizes that the name frame A20b for "menu B" is set.

When the operator drags his/her finger up to the photographic image display window A80 while the finger remains touching on the display of "menu B", the information display area positioning unit 424 (Fig. 6) displays the name frame A60 associated with "menu B" on the photographic image display window A80. The name frame A60 has a predetermined shape (e.g., a rectangular shape) and a size that is selected with the selection button B16. The name frame A60 changes a display position according to the position of the operator's finger.

When the operator lifts his/her finger from the photographic image display window A80, with operation of the information display area positioning unit 424, the name frame A60 is set to be in a position from which the finger is lifted, on the photographic image display window A80. At this time, the position of the name frame A60 that is set can be changed with a later operation, and because of this, may not be exact.

Subsequently, with the operation of the information display area positioning unit 424, as illustrated in Fig. 10B, the position of the name frame A60 is adjusted. Specifically, the operator touches again on the name frame A60 to hold the name frame A60, and drags an upper left apex Pe of the name frame A60 up to a position of an upper left apex Pf of the name frame A20b that is desired to be set, to generate a name frame A62.

The operator checks that the name frame A62 is a desired position and lifts his/her finger. Then, under the condition that the name frame final-decision button A46 is touched, the information display area positioning unit 424 sets the name frame A62 as the name frame A20b for "menu B."

### Description of a Method of setting the "i" button

Next, a method of setting the "i" button A30 is described with reference to Figs. 11A and 11B. Figs. 11A and 11B illustrate the method of setting the "i" button A30. Fig. 11A illustrates an example of an operation of setting the reference "i" button A70 to be in an initial position of the "i" button A30. Fig. 11B illustrates an example of an operation of moving a position of the reference "i" button A70.

In the order terminal 102a, when the GUI creation program P2 (Fig. 2) is executed and thus the setting of the "i" button A30 is selected, an "i" button setting screen G4 that is illustrated in Fig. 11A is displayed on the display unit 111.

As illustrated in Fig. 11A, the "i" button setting screen G4 includes the photographic image display window A80 and the menu item display window B10.

The functions of the photographic image display window A80 and the menu item display window B10 are as described above, but the photographic image display window A80 includes an "i" button final-decision button A48 that makes a final decision on the "i" button A30 that is set. A function of the "i" button final-decision button A48 will be described below. Furthermore, only a menu item that includes detailed information is displayed on the menu item display window B10.

In Fig. 11A, the operator first causes a menu item that is displayed in the form of a list on the menu item display window B10 to be scrolled, and selects (touches on) a menu item that is associated with the "i" button A30 that is set. At this point, it is assumed that the photographic image A20a shows "menu B" and thus the "i" button A30 associated with "menu B" is set for the photographic image A20a. The menu item association unit 432 (Fig. 6) detects that "menu B" displayed on the menu item display window B10 is touched and thus recognizes that the "i" button A30 for "menu B" is set.

When the operator drags his/her finger up to the photographic image display window A80 while the finger remains touching on the display of "menu B", the "i" button positioning unit 434 (Fig. 6) displays the reference "i" button A70 associated with "menu B" on the photographic image display window A80. The reference "i" button A70 has a predetermined size and a predetermined shape (e.g., a circular shape). The reference "i" button A70 changes the display position according to the position of the operator's finger.

When the operator lifts his/her finger from the photographic image display window A80, with operation of the "i" button positioning unit 434, the reference "i" button A70 is set to be in a position from which the finger is lifted, on the photographic image display window A80. At this time, the position of the reference "i" button A70 that is set can be changed with a later operation, and because of this, may not be exact.

Subsequently, with the operation of the "i" button positioning unit 434, as illustrated in Fig. 11B, the position of the reference "i" button A70 is adjusted. Specifically, the operator touches again on the reference "i" button A70 to hold the reference "i" button A70, and drags the reference "i" button A70 up to a position in which the "i" button A30 is desired to be set to be, to generate a reference "i" button A72.

The operator checks that the reference "i" button A72 is at a desired position and lifts his/her finger. Then, under the condition that the "i" button final-decision button A48 is touched, the "i" button positioning unit 434 sets the reference "i" button A72 as the "i" button A30 for "menu B".

### Description of a Method of Setting Screen Information that Pops up with the "i" button

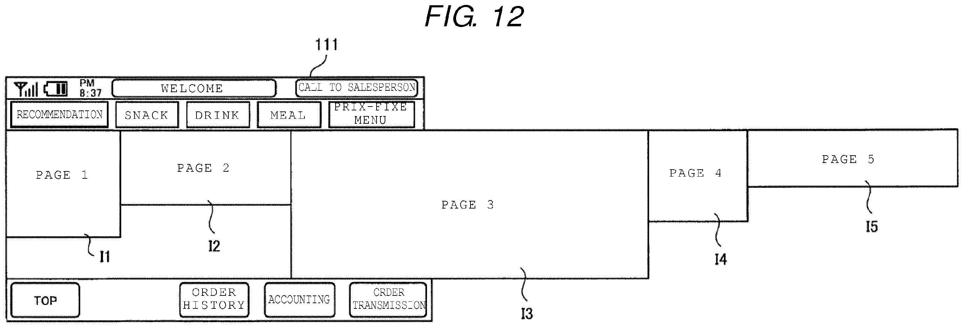

Next, a method of setting detailed information of a menu item that pops up when the "i" button A30 is touched on is described with reference to Fig. 12. Fig. 12 illustrates an example of a configuration of a screen that pops up when the "i" button A30 is touched.

As illustrated in Fig. 12, a plurality of pages, that is, screens I1, I2, I3, I4, and 15 are allocated to different pieces of detailed information, respectively, of a menu item that pops up when the "i" button A30 is touched on. Fig. 12 is an example in which five pages are allocated. The pages, that is, the screens I1, I2, I3, I4, and 15 have different sizes, respectively. Pieces of detailed information that correspond to a menu item, for example, nutrition information, place-of-production information, and the like of the menu item are described on pages, respectively.

### Description of an Operation of Turning over a Page, that is, a Screen that Pops up, by operating the "i" button

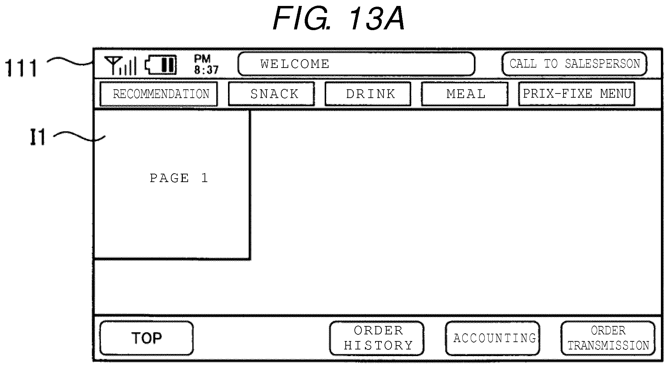

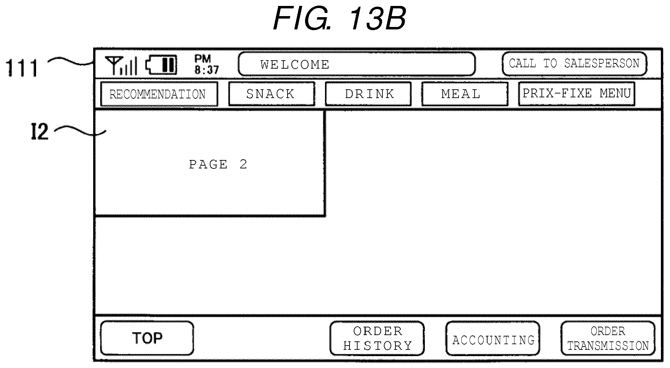

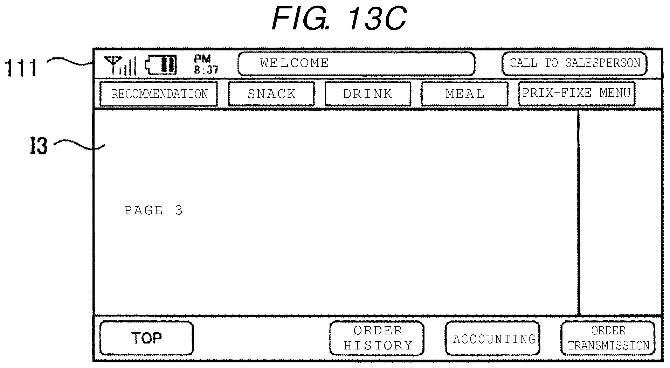

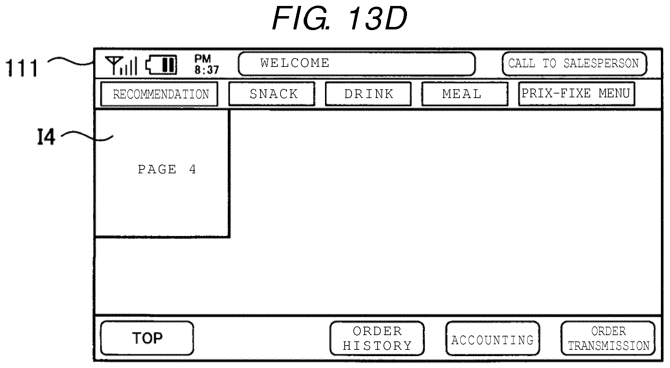

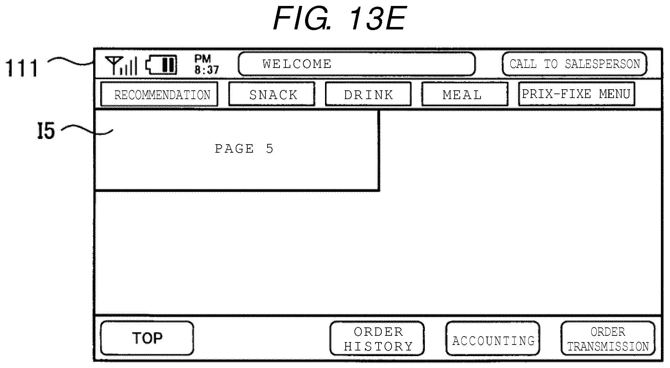

Figs. 13A to 13E illustrate an operation of turning over a page, that is, a screen that pops up by operating the "i" button A30. The detailed information that pops up can be browsed on a per-page basis. Fig. 13A illustrates a state where the first page, that is, the screen I1 is displayed. Fig. 13B illustrates a state where the second page, that is, the screen I2 is displayed. Fig. 13C illustrates a state where the third page, that is, the screen I3 is displayed. Fig. 13D illustrates a state where the fourth page, that is, the screen I4 is displayed. Fig. 13E illustrates a state where the fifth page, that is, the screen 15 is displayed.

Although not illustrated in Figs. 13A to 13E, each page includes a page advancing button, a page turning-back button, a closing button for closing the detailed information that pops up. The detailed information can be advanced and turned back on a per-page basis by touching on the page advancing button and the page turning-back button, respectively. Furthermore, by touching on the closing button, the detailed information is closed and returning to the screen that is present before the "i" button A30 is touched takes place.

It is noted that, as the detailed information, a page that has a greater area than a size of the display unit 111 of the order terminal 102 can be allocated. At this time, a page that is displayed on the display unit 111 is scrolled up and down and from side to side for browsing.

### Description of Allocation Information that is Generated When Each Frame is Set

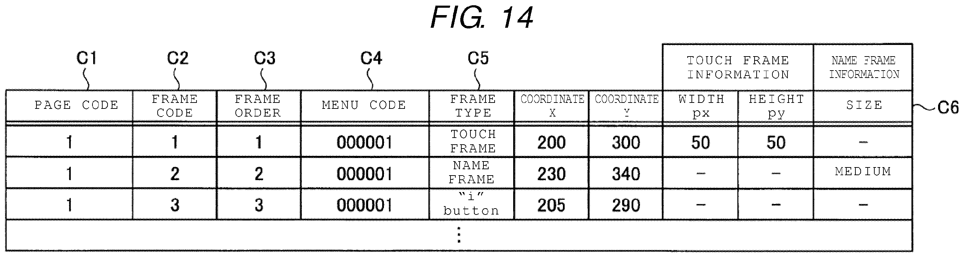

Next, allocation information on each frame, which is generated when the GUI described above is created is described. Fig. 14 illustrates allocation information that is generated by the order terminal 102a when the touch frame A20c, the name frame A20b, and the "i" button A30 are set. As illustrated in Fig. 14, the allocation information that corresponds to each of the touch frame A20c, the name frame A20b, and the "i" button A30 is generated. Pieces of allocation information that are generated are associated with menu codes, respectively, that are read by the order terminal 102a from the nonvolatile memory 215 (Fig. 2).

Each piece of allocation information is described with reference to Fig. 14. A page code C1 is a number that uniquely specifies a page number of the menu selection screen G1 (Fig. 4) that is displayed on the display unit 111. A frame code C2 is a number that uniquely specifies a frame that is set within the same page. A frame order C3 is information that is used for setting a priority level for overlapping areas when a plurality of different frames are set in an overlapping manner. It is noted that a method of using the frame order C3 will be described below. A menu code C4 is a number that uniquely specifies each menu item. A frame type C5 indicates a type of frame (e.g., a touch frame, a name frame, or an "i" button). A coordinate X is a coordinate that specifies a frame setting position in terms of the horizontal position. A coordinate Y is a coordinate that specifies the frame setting position in terms of the vertical position. A width px indicates a size in the horizontal direction, of the touch frame A20c. A height py indicates a size in the vertical direction, of the touch frame A20c. A size C6 indicates the size of the name frame A20b.

These pieces of allocation information that are generated in the order terminal 102a are retained, for example, in the RAM 205 (Fig. 2). Then, when the touch operation for each frame is detected, the order reception processing system 100 performs processing (e.g., creation of the order data, or popping-up of the detailed information that is designated) in accordance with the frame that is touched on, by referring to information that corresponds to a frame that is touched on in the allocation information.

### Description of Priority Levels of the Overlapping Touch Frames

When a plurality of frames, that is, the touch frame A20c, the name frame A20b, and the "i" button A30 are set, there is a case where the frames are set in an overlapping manner. In such a case, when the plurality of frames are touched on in the overlapping areas, there is a need to uniquely decide what response is made. A method of allocating priority levels for the overlapping areas of the frames will be described below. It is noted that the priority levels that will be described are allocated by the priority level setting unit 440 (Fig. 6).

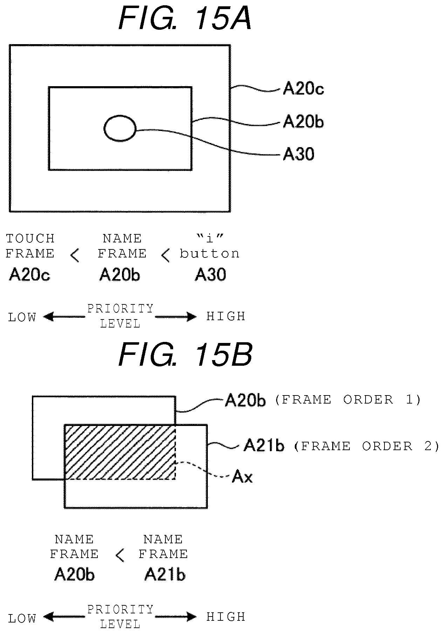

Figs. 15A and 15B are diagrams for describing a method of allocating the priority levels when the positions of the buttons that are set overlap. Fig. 15A is a diagram illustrating the method of setting the priority levels when different type of frames overlap. Fig. 15B is diagram illustrating the method of setting the priority levels when the same types of frames overlap.

As illustrated in Fig. 15A, when different types of frames are set in an overlapping manner, the highest priority level is assigned to the "i" button A30 in the overlapping areas. Then, the second highest priority level is assigned to the name frame A20b. The lowest priority level is set for the touch frame A20c.

That is, in the layout that is illustrated in Fig. 15A, when the touch frame A20c, the name frame A20b, the "i" button A30 are set, if an area of the "i" button A30 is touched on, the order terminal 102 recognizes that the "i" button A30 is selected. Furthermore, if an area of the name frame A20b is touched on, the order terminal 102 recognizers that the name frame A20b is selected. Additionally, if an area of the touch frame A20c is touched on, the order terminal 102 recognizes that the touch frame A20c is selected.

In contrast, when the same types of frames are set in an overlapping manner, as illustrated in Fig. 15B, the priority level that is based on the frame order C3 (refer to Figs. 13A to 13E) described above is assigned to each name frame. That is, in an example that is illustrated in Fig. 15B, it is illustrated that, when the name frame A20b (a frame order 1) and a name frame A21 b (a frame order 2) are set in an overlapping manner, a function of the name frame A21b that has a greater numerical value which is assigned as the frame order is allocated to an overlapping area Ax.

That is, when the name frame A20b and the name frame A21b are set on a layout that is illustrated in Fig. 15B, if the overlapping area Ax in which the name frame A20b and the name frame A21b overlap is touched on, the order terminal 102 replies that the name frame A21b is touched on.

### Description of a flow of a GUI Setting Sequence

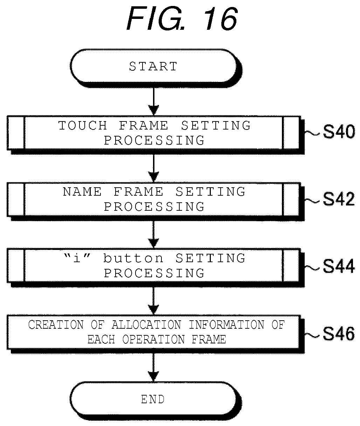

Next, a flow of GUI creation processing is described with reference to Fig. 16. Fig. 16 is a flowchart illustrating an example sequence of operations of the GUI creation processing.

The order terminal 102a (in particular, the CPU 202) performs touch frame setting processing (Step S40). An in-depth detail of the touch frame setting processing is as is described with reference to Figs. 7A to 7C, Fig. 8A to 8C, and Fig. 9.

The order terminal 102a (in particular, the CPU 202) performs name frame setting processing (Step S42). An in-depth detail of the name frame setting processing as is described with reference to Figs. 10A and 10B.

The order terminal 102a (in particular, the CPU 202) performs "i" button setting processing (Step S44). An in-depth detail of the "i" button setting processing is as is described with reference to Figs. 11A and 11B.

The order terminal 102a (in particular, the CPU 202) performs creation of the allocation information of each operation frame (Step S46). The allocation information that is created is as illustrated in Fig. 14.

As described above, the order terminal 102a according to the embodiment includes the display unit 111, the operation area setting unit 400, and the operation area superimposition unit 410. The photographic image A20a that shows a menu item (e.g., merchandise or a service) is displayed on the display unit 111, in a display size that is designated. The operation area setting unit 400 positions the touch frame A20c for providing an instruction for the selection of the menu item, in a position in accordance with the photographic image A20a, in association with the menu item. The operation area superimposition unit 410 changes a position and a size of the touch frame A20c according to a position and a display size of the photographic image A20a, for the superimposition on the photographic image A20a. Therefore, even in a case where the display size of the photographic image A20a that shows the menu item is changed, the touch frame A20c that is superimposed on the photographic image A20a can be easily set according to the display position and the display size of the photographic image A20a.

Furthermore, in the order terminal 102a according to the embodiment, the operation area positioning unit 404 of the operation area setting unit 400 positions a plurality of reference operation areas A52, each of which has a predetermined size and each of which is associated with merchandise or a service, in the position in accordance with the photographic image A20a, respectively. Then, the operation area alignment unit 414 of the operation area superimposition unit 410 causes the plurality of reference operation areas (A90 to A97) to be aligned with a position in accordance with the shape of the photographic image A20a, for the superimposition on the photographic image A20a. Therefore, even when the photographic image A20a has a complicated shape, the touch frame A20c that is superimposed on the photographic image A20a can be easily set.

Then, in the order terminal 102a according to the embodiment, the photographic image A20a has the layout information J that indicates the display area in the display unit 111, and the operation area positioning unit 404 of the operation area setting unit 400 positions the reference operation area A52 that is based on the layout information J. Then, the operation area size change unit 412 of the operation area superimposition unit 410 changes the size of the reference operation area A52 based on the layout information J, and sets the touch frame A20c to be in a position (for example, a position that is circumscribed about the photographic image A20a) in accordance with the display position of the photographic image A20a. Therefore, even in a case where the display size of the photographic image A20a that is displayed on the display unit 111 is changed, the touch frame A20c for selecting a menu item associated with the photographic image A20a can be easily set based on the layout information J of the photographic image A20a that is displayed on the display unit 111.

Additionally, in the order terminal 102a according to the embodiment, the operation area positioning unit 404 of the operation area setting unit 400 positions the reference operation area A52 in a position that is based on the operation instruction of the operator. Then, the operation area size change unit 412 of the operation area superimposition unit 410 changes the size of the reference operation area A52 according to the operation instruction of the operator. Therefore, even in a case where the display size of the photographic image A20a displayed on the display unit 111 is changed, the touch frame A20c for selecting the menu item associated with the photographic image A20a can be easily set according to the instruction of the operator.

Furthermore, in the order terminal 102 according to the embodiment, the information display area setting unit 420 displays the information associated with the menu item (e.g., the merchandise or the service) that corresponds to the photographic image A20a, in the position in accordance with the photographic image A20a, and sets the name frame A20b that has an operation area for providing an instruction for the selection of the menu item. Therefore, the name frame A20b for showing a detail of a menu item and for selecting the menu item can be easily set in the position in accordance with the photographic image A20a.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

For example, the order selection instruction program P1 and the GUI creation program P2 that are executed in the order terminal 102a according to the embodiment, which is described above, are provided in such a manner as to be stored in the nonvolatile memory 215 in advance, but are not limited to this. For example, the order selection instruction program P1 and the GUI creation program P2 may be provided in such a manner as to be recorded on a file in an installation-enabled format or in an execution-enabled format, or on a computer-readable recording medium, such as a CD-ROM, a flexible disk (FD), a CD-R, or a digital versatile disc (DVD).

Additionally, a configuration may be employed in which the order selection instruction program P1 and the GUI creation program P2 that are executed in the order terminal 102a according to the embodiment, which is described above, are stored on a computer that is connected to a network, such as the Internet, and are provided in such a manner as to be downloaded to the order terminal 102a through the LAN 122. Alternatively, a configuration may be employed in which the order selection instruction program P1 and the GUI creation program P2 are provided or distributed through the network such as the Internet.

## Claims

1. A terminal device, comprising:
a display unit configured to display an image on a screen thereof and to be responsive to a touch operation with respect to a position on the screen;
a processor; and
a memory device storing programs executable by the processor causing the processor to:
control the display unit to display image information indicating an order item in a set display size and position,
set an operation area at a position on the screen in which a touch operation corresponds to an instruction for selecting the order item,
set an operation area at a position on the screen in which a touch operation corresponds to an instruction for selecting the order item,
change at least one of a display size and a display position of the operation area for superimposition on the image information, and
save the at least one of the changed display size the changed display position of the operation area.

2. The device according to claim 1, wherein the at least one of the display size and the display position of the operation area is changed based on one or more touch operations.

3. The device according to claim 1 or 2, wherein
the operation area includes a plurality of smaller operation areas associated with the order item, each of the smaller operation areas having a predetermined size, and
the position of the smaller operation areas is aligned with the image information, for the superimposition on the image information.

4. The device according to any one of claims 1 to 3, further comprising:
a communication interface,
wherein the programs further cause the processor to control the communication interface to transmit the changed display size and the changed display position of the operation area to one or more different order terminal devices.

5. The device according to any one of claims 1 to 4, wherein the programs further cause the processor to:
control the display unit to display name information of the order item in a set display size and position saved in the memory device, and
change at least one of the display size and position of the name information; and
save the at least one of the changed display size and position of the name information in the memory device.

6. The device according to any one of claims 1 to 5, wherein the programs further cause the processor to:
control the display unit to display a reference button, for retrieving further information regarding the order item, in a set position saved in the memory device;
change a display position of the reference button; and
save the changed display position of the reference button in the memory device.

7. The device according to any one of claims 1 to 6, wherein the programs further cause the processor to:
control the display unit to display a plurality of different image information, each indicating a different order item.

8. A method for generating an order interface, the method comprising:
controlling the display unit to display image information indicating an order item in a set display size and position;
setting an operation area at a position on the screen in which a touch operation corresponds to an instruction for selecting the order item;
changing at least one of a display size and a display position of the operation area for superimposition on the image information; and
saving the at least one of the changed display size and the changed display position of the operation area.

9. The method according to claim 8, wherein the at least one of the display size and the display position of the operation area is changed based on one or more touch operations.

10. The method according to claim 8 or 9, wherein
the operation area includes a plurality of smaller operation areas associated with the order item, each of the smaller operation areas having a predetermined size, and
the position of the smaller operation areas is aligned with the image information, for the superimposition on the image information.

11. The method according to any one of claims 8 to 10, wherein the method further comprises:
transmitting the changed display size and the changed display position of the operation area to one or more different order terminal devices.

12. The method according to any one of claims 8 to 11, wherein the method further comprises:
controlling the display unit to display name information of the order item in a set display size and position saved in the memory device;
changing at least one of the display size and position of the name information; and
saving the at least one of the changed display size and position of the name information in the memory device.

13. The method according to any one of claims 8 to 12, wherein the method further comprises:
controlling the display unit to display a reference button, for retrieving further information regarding the order item, in a set position saved in the memory device;
changing a display position of the reference button; and
saving the changed display position of the reference button in the memory device.

14. The method according to any one of claims 8 to 13,, wherein the method further comprises:
controlling the display unit to display a plurality of different image information, each indicating a different order item.

15. A non-transitory computer readable medium containing instructions causing a terminal device having a display unit configured to display an image on a screen thereof and to be responsive to a touch operation with respect to a position on the screen, a memory device, and a processor, to execute the method of generating an order interface according to any one of claims 8 to 14.
